# EUROPEAN PATENT APPLICATION

(11) **EP 3 808 955 A1**
(43) Date of publication of application: **21.04.2021**
(21) Application number: 19203268.8
(22) Date of filing: 15.10.2019
(51) Int. Cl.: F02B 75/04, F01L 1/344

(54) **AN INTERNAL COMBUSTION ENGINE WITH VARIABLE COMPRESSION RATIO**

(71) Applicant: Gomecsys B.V., 1411 AR Naarden (NL)
(72) Inventor: De Gooijer, Lambertus Hendrik, 1401 EP Bussum (NL)
(74) Representative: De Vries & Metman

(57) **Abstract**

An internal combustion engine (1) with variable compression ratio comprises an engine block (2), a crankshaft (3) having at least a crankpin (4), a crank arm (5) and a main portion (6), wherein the main portion (6) is supported by the engine block (2) and the crankshaft (3) is rotatable with respect to the engine block (2) about a crankshaft axis (CA), a connecting rod (13) including a big end which is drivably coupled to the crankpin via a link (11), which link (11) is rotatable with respect to the big end about a centreline of the big end and to the crankpin (4) about a centreline of the crankpin (4), an adjusting shaft (21) which is rotatable with respect to the engine block (2) and drivably coupled to the link (11) such that upon turning the adjusting shaft (21) the link (11) turns about the crankpin at a virtual standstill of the engine (1) so as to vary its compression ratio, and a drive unit (23) for driving an input portion (22) of the adjusting shaft (21) so as to turn the adjusting shaft (21) with respect to the engine block (2). The internal combustion engine (1) comprises a friction coupling (25', 27, 29, 43) which is functionally located between the drive unit (23) and the input portion (22) of the adjusting shaft (21), wherein the friction coupling is adapted such that in case of exceeding a predetermined torque on the adjusting shaft (21) caused by the connecting rod (13), the friction coupling slips.

## Description

The present invention relates to an internal combustion engine with variable compression ratio according to the preamble of claim 1.

The engine according to the preamble of claim 1 is known from both WO 2013/110700 and WO 2015/124565. The known engine provides the opportunity to adjust the top dead centre of the piston, hence its compression ratio, by changing the rotational position of the adjusting shaft with respect to the engine block. Under stable running conditions at a certain engine speed and load the adjusting shaft has a fixed rotational position with respect to the engine block and the engine runs at a fixed compression ratio.

The known engine is a four-stroke internal combustion engine. Its piston completes four successive strokes during two revolutions of the crankshaft: an inlet stroke, a compression stroke, a combustion stroke and an exhaust stroke. It is well-known that the mentioned engine in the form of a spark ignition engine with variable compression ratio provides the opportunity to operate the engine at high efficiency, particularly under part-load conditions. Increasing compression ratio leads to decreasing fuel consumption. At high-load or full-load the compression ratio must be lowered in order to avoid knocking.

In the known engine the link is in the form of an eccentric element on which the big end of the connecting rod is rotatably mounted. Upon changing the rotational position of the eccentric element with respect to the crankpin at a virtual standstill of the crankshaft, the position of the piston with respect to the engine block varies in its top dead centre. This provides the opportunity to increase the compression ratio at part load conditions. The highest compression ratio can be achieved when at top dead centre of the piston at the end of the compression stroke the centreline of the big end, the centreline of the crankpin and the crankshaft axis lie within a common plane whereas the centreline of the crankpin extends between the centreline of the big end and the crankshaft axis. The lowest compression ratio can be achieved when at top dead centre of the piston at the end of the compression stroke the centreline of the big end, the centreline of the crankpin and the crankshaft axis also lie within a common plane, but wherein the centreline of the big end extends between the centreline of the crankpin and the crankshaft axis.

Under operating conditions the combustion forces on the piston and the inertia forces of the piston are transferred to the eccentric element through the connecting rod. Since the centreline of the big end extends parallel to the centreline of the crankpin a force of the connecting rod onto the eccentric element may lead to a torque onto the eccentric element about the centreline of the crankpin which torque is transferred via the adjusting shaft to the drive unit, depending on the actual mutual orientation of the crankshaft, the eccentric element and the connecting rod. Since the mentioned forces and the mutual rotational positions vary with the rotational position of the crankshaft with respect to the engine block the actual torque on the eccentric element varies accordingly. Under stable operating conditions the resulting average torque on the adjusting shaft is directed in one direction due to the combustion forces and increases with increasing engine load. At high engine speed relatively high torque peaks may be directed in opposite direction. This is caused by relatively high inertia forces of the piston; when the piston passes top dead centre at the end of the exhaust stroke, it exerts an inertia force on the connecting rod opposite to the combustion force during the combustion stroke.

Similar to other engine parameters like desired ignition timing, the rotational position of the adjusting shaft as a function of engine speed and load is stored in a look-up map in the control unit. At each speed and load the control unit will control the drive unit in order to set the adjusting shaft to a position as defined by the look-up map. Under full load conditions the rotational position of the adjusting shaft corresponds to a low compression ratio, whereas at decreasing load conditions it shifts to a rotational position which corresponds to increasing compression ratio. The actual engine speed and load can be determined by well-known means.

A disadvantage of the known engine is that in case of a sudden excessive torque peak onto the adjusting shaft, for example caused by knocking, the torque peak is also transferred to the drive unit, which might be detrimental or even cause damage to the drive unit. This may also happen in alternative engines wherein the link is drivably coupled to the adjusting shaft in a different way than disclosed in the above-identified prior art, but in which excessive combustion forces are also transferred via the connecting rod and the adjusting shaft to the drive unit.

An object of the invention is to provide an internal combustion engine which minimizes the risk of overloading the drive unit.

This object is accomplished with the internal combustion engine according to the invention, wherein the internal combustion engine comprises a friction coupling which is functionally located between the drive unit and the input portion of the adjusting shaft, wherein the friction coupling is adapted such that in case of exceeding a predetermined torque on the adjusting shaft caused by the connecting rod, the friction coupling slips.

An advantage of the engine according to the invention is that the friction coupling allows to decouple the adjusting shaft from the drive unit automatically when the connecting rod exerts an excessive torque on the adjusting shaft through the link, whereas the drive unit may be at a standstill.

The friction coupling provides a fixed mechanical connection between the drive unit and the input portion of the adjusting shaft under normal operating conditions, but allows slip under excessive peak load conditions, for example in case of a high combustion force peak when the engine knocks or tends to start knocking. During such a load peak the friction coupling allows the adjusting shaft to temporarily rotate at a standstill of the drive unit. Consequently, the load peak is not transferred to the drive unit. Furthermore, due to the presence of the friction coupling a mechanism between the link and the adjusting shaft is safeguarded. In fact, an excessive torque peak on the link caused by the connecting rod is converted to friction energy dissipation in the friction coupling.

A further advantage of the engine according to the invention is that the friction coupling in combination with the position sensor can sense an excessive combustion force which may lead to knocking, such that a knock sensor can be omitted. Due to the presence of the position sensor a rotational offset of the adjusting shaft after slip due to a load peak can be determined by the control unit. As soon as the control unit detects that the position sensor provides a deviating signal, i.e. deviating from the value as stored in the look-up map, without controlling the drive unit other parameters such as ignition timing may be adapted to avoid knocking.

In a particular embodiment the engine is a four-stroke engine wherein the link comprises an eccentric element on which the big end of the connecting rod is rotably mounted, which eccentric element is rotatably mounted on the crankpin, wherein the adjusting shaft extends concentrically through the main portion of the crankshaft such that its centreline coincides with the crankshaft axis and which adjusting shaft is rotatable with respect to the crankshaft, wherein the engine further comprises an internal transmission, through which the eccentric element is drivably coupled to an output portion of the adjusting shaft, wherein the internal transmission is adapted such that when the adjusting shaft has a fixed rotational position with respect to the engine block under operating conditions the eccentric element rotates with respect to the crankpin in opposite direction of the direction in which the crankshaft rotates with respect to the engine block and at half speed thereof, wherein the input portion is located at a distance from the output portion at a side of the crank arm which is opposite to the side where the crankpin is located. In this case the top dead centre of the piston at the end of the compression stroke differs from the top dead centre at the end of the exhaust stroke; the position of top dead centre at the end of the compression stroke defines the actual compression ratio. The internal transmission may comprise a gear transmission. Since the gears are preferably compact, the safeguard function of the friction coupling is advantageous.

The control unit may be configured such that after detecting a rotation of the adjusting shaft through a signal from the position sensor, without controlling the drive unit, the control unit controls the drive unit such that the adjusting shaft is turned back to a position as defined by the look-up map which defines a desired rotational position of the adjusting shaft as a function of engine speed and load.

In a particular embodiment an external transmission is functionally located between the friction coupling and the drive unit. In this case both the external transmission and the drive unit are protected against overload. For example, if the external transmission comprises a gear transmission, overloading of the gear teeth may be avoided.

In a practical embodiment, the external transmission comprises a worm gear which is drivably coupled to the input portion of the adjusting shaft via the friction coupling and a worm which meshes with the worm gear and which is drivably coupled to the drive unit. Since this type of external transmission is sensitive to overloading the gear teeth, it is advantageous that the friction coupling is functionally located between the input portion and the external transmission. A worm gear transmission obstructs the adjusting shaft to rotate in case of an excessive force on the connecting rod. Therefore, the friction coupling is advantageous in combination the worm gear transmission so as to safeguard the mechanism between the link and the adjusting shaft.

The drive unit may be an electric motor, which is a compact and low-cost drive means.

In a preferred embodiment, under operating conditions the rotational position of the link relative to the crankshaft is such that when the friction coupling slips as a result of an excessive combustion force on the connecting rod the adjusting shaft rotates in a direction in which the compression ratio decreases. In this case the friction coupling allows to automatically turn the adjusting shaft by the excessive combustion force to a direction in which the compression ratio is lowered so as to reduce the risk of knocking automatically.

For example, in case of the embodiment including the eccentric element, at the highest compression ratio, which is possible at relatively low engine load, when the piston is in top dead centre at the end of the compression stroke, the centreline of the big end is located in a plane in which the crankshaft axis and the centreline of the crankpin lie, whereas the centreline of the crankpin lies between the centreline of the big end and the crankshaft axis; and at the lowest compression ratio, which is typically the case at high engine load, when the piston is in top dead centre at the end of the compression stroke, the centreline of the big end lies at an angle of less than 180° about the centreline of the crankpin beyond the mentioned location at the highest compression ratio as seen in a direction of rotation of the crankshaft with respect to the engine block under operating conditions. The range within which the eccentric element is rotatable at top dead centre at the end of the compression stroke when the engine is running is defined in the look-up map which defines a desired rotational position of the adjusting shaft as a function of engine speed and load. It is also possible to make use of the automatic turning of the adjusting shaft deliberately in order to switch to a lower compression ratio quickly in case of suddenly increasing engine load. In this case the excessive combustion force is a normal combustion force without occurrence of knock.

The friction coupling may comprise a first part which is drivably coupled to the drive unit and a second part which is drivably coupled to the input portion of the adjusting shaft, wherein the friction coupling further comprises a spring for pressing the first and second parts to each other. The spring force determines the predetermined torque above which the adjusting shaft will rotate.

In a more specific embodiment the first part is formed by an axial side of the worm gear and the second part is a pressure plate which is mounted to the adjusting shaft and movable in axial direction thereof, wherein the spring is mounted between the pressure plate and the engine block such that the pressure plate is pressed against the axial side of the worm gear. Hence, the friction coupling is partly integral with the external transmission.

The friction coupling may be an adjustable friction coupling for adjusting the predetermined torque above which the friction coupling slips. This allows to apply a lower threshold at which the friction coupling starts to slip at lower load conditions, which provides the opportunity to detect excessive combustion forces at low engine load, as well.

The friction coupling may be provided with an electromagnet which cooperates with one of the first and second parts and which is controllable by the control unit so as to exert a counterforce on the one of the first and second parts against the force of the spring, wherein the control unit contains a look-up map of control values of the electromagnet as a function of engine speed and load. When a higher electrical current flows through the electromagnet the first and second parts will be pressed to each other less strongly such that the maximum friction before slip occurs becomes lower.

In practice, when calibrating a test engine of the type of the engine as defined hereinbefore on a test bed, the maximum allowable combustion force peak can be determined at a plurality of combinations of engine speed and load by using a combustion pressure sensor and the associated maximum friction levels of the adjustable friction coupling can be stored as a look-up map of control values of the electromagnet which map is loaded in the control units of production engines similar to the test engine, which production engines are not provided with combustion pressure sensors. When the production engine is running at a certain speed and load the friction coupling is set to the corresponding threshold value by setting the electromagnet at a control value as stored in the look-up map. When a combustion force peak of the engine at this speed and load exceeds the maximum allowable level the friction coupling will temporarily slip and turn the adjusting shaft by a certain angle. The position sensor detects a rotation of the adjusting shaft whereas the drive unit may stand still. This triggers the control unit that it must take action to avoid knocking, for example retarding ignition timing. After that or simultaneously, the drive unit can be activated by the control unit to turn the adjusting shaft to its original position corresponding to the combination of engine load and speed, as stored in the look-up map, which defines a desired rotational position of the adjusting shaft as a function of engine speed and load.

In a particular embodiment the engine is provided with a blocking system for obstructing rotation of the adjusting shaft with respect to the engine block at a recalibrating position of the adjusting shaft, wherein the control unit is configured such that at a standstill of the crankshaft the drive unit is driven when the blocking system obstructs rotation of the adjusting shaft, wherein actual driving power of the drive unit for overcoming friction of the friction coupling during driving the drive unit is determined by the control unit at different control values of the electromagnet, and wherein the actual driving power as a function of the control values of the electromagnet is compared with a relationship between desired driving power and control values of the electromagnet as stored in the control unit, on the basis of which the look-up map of control values of the electromagnet as a function of engine speed and load is updated. This provides the opportunity to check and recalibrate the friction coupling in response to a change in friction behaviour during lifetime, for example due to wear. If the required power of the drive unit in order to drive the friction coupling under the same condition as determined during calibrating the engine has decreased, it means that the functioning of the friction coupling has reduced. The control unit may be updated such that the adjustable friction coupling is recalibrated to its original settings.

When checking the relationship between the control value of the electromagnet and the actual driving power required for driving the drive unit at standstill of the crankshaft and the adjusting shaft the control value of the electromagnet can be updated regularly, for example before an engine start.

In a low-cost embodiment the blocking system comprises cooperating projections at the pressure plate and the engine block, which abut each other at the recalibrating position.

The recalibrating position may correspond to the lowest compression range under operating conditions.

The predetermined torque may be selected such that the friction coupling slips when the engine load switches from a low load condition to a high load condition. During such a load switch the compression ratio must be decreased. Since the adjusting shaft automatically rotates in a direction in which the compression ratio decreases, a quick switch from high to low compression ratio can be achieved, whereas fine-tuning to a desired rotational position of the adjusting shaft can be achieved through the control unit.

The invention will hereafter be elucidated with reference to very schematic drawings showing embodiments of the invention by way of example.
Fig. 1 is a perspective sectional view of a part of an embodiment of an internal combustion engine according to the invention.
Fig. 2 is a perspective view of a part of the embodiment of Fig. 1 on a larger scale.
Fig. 3 is a similar view as Fig. 2 of a different part of the embodiment of Fig. 1.
Fig. 4 is a similar view as Fig. 1, but showing a part thereof on a larger scale.
Fig. 5 is an exploded view of the embodiment as shown in Fig. 4.
Fig. 6 is a sectional view of a part of an alternative embodiment of an internal combustion engine according to the invention.
Fig. 7 is an exploded perspective sectional view of the embodiment as shown in Fig. 6.

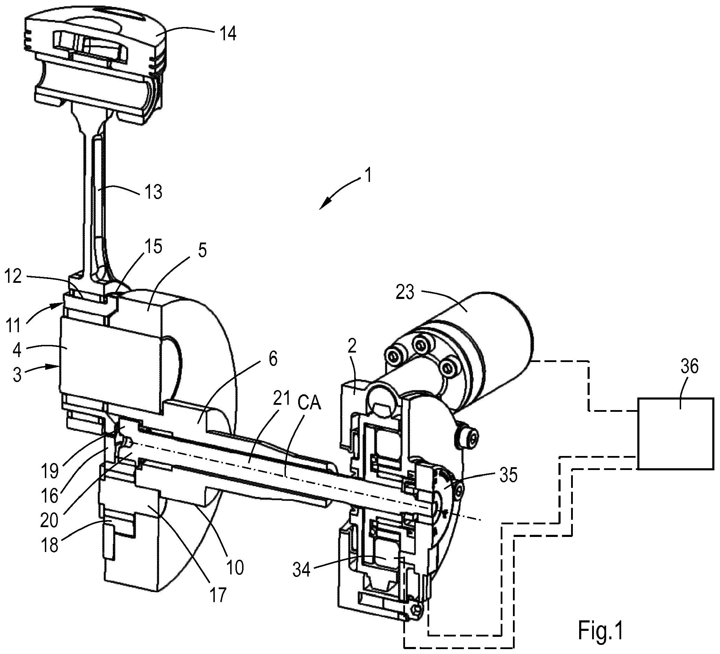

Figs. 1-5 show a part of an embodiment of an internal combustion engine 1 according to the invention. The engine 1 is a single-cylinder four-stroke spark ignition engine which is typically applied in motorcycles, but alternative applications are conceivable. The engine 1 comprises an engine block 2, which supports a crankshaft 3. For explanatory reasons only a part of the engine block 2 is shown in Figs. 1, 4 and 5. The crankshaft 3 includes a crankpin 4, crank arms 5 at opposite ends of the crankpin 4 in axial direction thereof and main portions 6. Each of the crank arms 5 is located between the crankpin 4 and one of the main portions 6 as seen in longitudinal direction of the crankshaft 3.

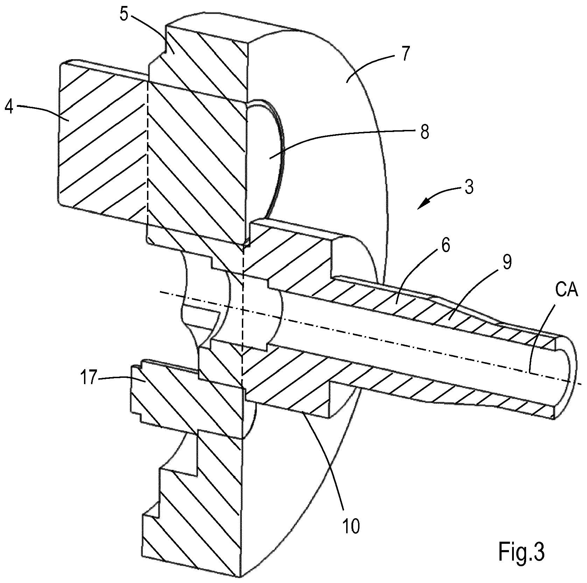

Fig. 3 shows a part of the crankshaft 3 in which the crankpin 4, one of the crank arms 5 and one of the main portions 6 are indicated more functionally and distinguished from each other through broken lines and different hatchings. The crankshaft 3 is built-up from different parts. In this case each of the crank arms 5 is formed by a disk 7 in which a mounting pin 8 is fixed through a press fitting. A part of the mounting pin 8 forms the crankpin 4. The main portion 6 as shown in Fig. 3 is formed by a bush 9 which is integral with the disk 7. The part of the crankshaft 3 which is not shown in Figs. 1 and 3 is also provided with a disk and a bush in order to form a corresponding crank arm and main portion, but these may have a different shape than the disk 7 and the bush 9 at the side of the crankpin 4 as shown in Figs. 1 and 3. It is noted that the crankshaft 3 can be composed in numerous alternative manners.

Referring to Figs. 1 and 3, the engine block 2 supports the main portion 6 at a bearing portion 10 thereof. The crankshaft 3 is rotatable with respect to the engine block 2 about a crankshaft axis CA. The crankshaft axis CA coincides with the centreline of the bush 9 and thus with the main portion 6.

The engine 1 comprises an eccentric element 11 which is rotatably mounted on the crankpin 4. The eccentric element 11 is provided with a bearing portion 12 which is disposed eccentrically with respect to the crankpin 4. The bearing portion 12 has an outer circumferential wall which bears a big end of a connecting rod 13. The bearing portion 12 has a centreline which coincides with the centreline of the big end. The centreline of the big end extends parallel to the centreline of the crankpin 4. The connecting rod 13 also includes a small end to which a piston 14 is rotatably connected.

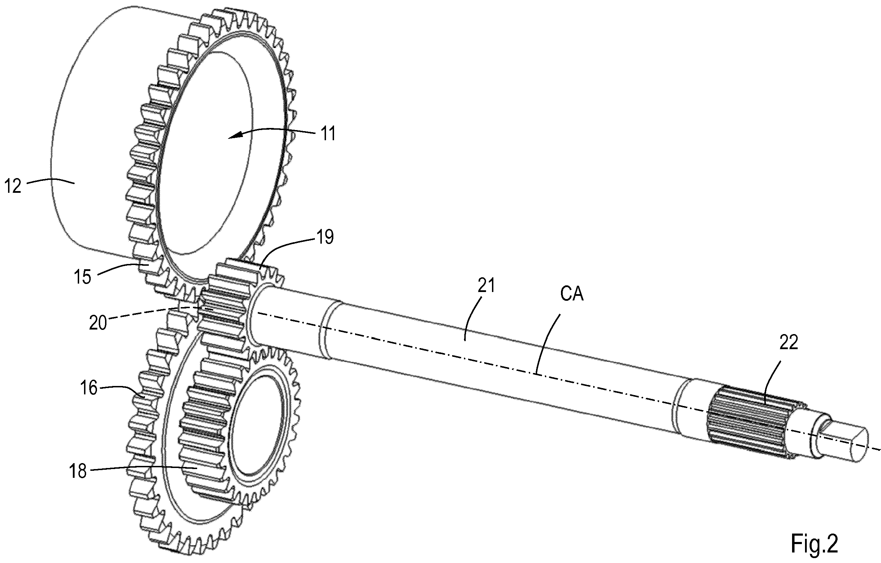

The eccentric element 11 is provided with an eccentric element gear 15 which meshes with a first intermediate gear 16, see Fig. 2. The first intermediate gear 16 is rotatably mounted on an intermediate gear pin 17, which is fixed to the disk 7 through a press fitting, see Fig. 3, and thus forms part of the crank arm 5. The intermediate gear pin 17 has a centreline which extends parallel to the crankshaft axis CA. The first intermediate gear 16 is fixed to a second intermediate gear 18 and their axes of rotation coincide. The diameter of the second intermediate gear 18 is smaller than the diameter of the first intermediate gear 16. The second intermediate gear 18 meshes with an auxiliary gear 19. The auxiliary gear 19 is fixed to an output portion 20 of an adjusting shaft 21, which extends concentrically through the crankshaft 3 and is supported by the crankshaft 3.

In this case the output portion 20 is formed by an end portion of the adjusting shaft 21 which projects from the crankshaft 3 and is located at a side of the crank arm 5 where the crank pin 4 is located. The adjusting shaft 21 is rotatable with respect to the crankshaft 3 about the crankshaft axis CA. Thus, the adjusting shaft 21 is rotatable about an adjusting shaft axis which coincides with the crankshaft axis CA. As a consequence, the centre line of the auxiliary gear 19 coincides with the crankshaft axis CA.

The eccentric element gear 15, the first and second intermediate gears 16, 18 and the auxiliary gear 19 form an internal transmission through which the eccentric element 11 and the output portion 20 of the adjusting shaft 21 are drivably coupled to each other.

Fig. 1 shows that the auxiliary gear 19, the first and second intermediate gears 16, 18 and the eccentric element gear 15 are mounted at the same side of the crank arm 5. i.e. the side of the crank arm 5 where the crankpin 4 is located. The crank arm 5 and the main portion 6 of the crankshaft 3 are arranged such that the adjusting shaft 21 extends through both.

The gear dimensions of the auxiliary gear 19, the first and second intermediate gears 16, 18 and the eccentric element gear 15 are selected such that under operating conditions the eccentric element 11 rotates with respect to the crankpin 4 in opposite direction of the direction in which the crankshaft 3 rotates with respect to the engine block 2 about the crankshaft axis CA and at half speed thereof when the adjusting shaft 21 is held at a fixed rotational position with respect to the engine block 2. It is noted that an alternative internal transmission is conceivable, for example a chain or toothed belt transmission, which results in the same rotational speed and direction of the eccentric element 11 relative to the engine block 2.

The engine 1 as shown in Figs. 1-5 provides the opportunity to adjust top dead centre of the piston 14, hence its compression ratio, by changing the rotational position of the adjusting shaft 21 with respect to the engine block 2. Hence, the rotational position of the eccentric element 11 with respect to the crankshaft 3 can be varied at a virtual standstill of the crankshaft 3 so as to vary the compression ratio. The functioning of the engine 1 is explained in more detail in WO 2013/110700.

The adjusting shaft 21 has an input portion 22 which is drivably connected to a drive unit in the form of an electric motor 23. The input portion 22 is located at a distance from the output portion 20 and located at a side of the crank arm 5 which is opposite to the side where the crankpin 4 is located. In this case the input portion 22 is formed by an end portion of the adjusting shaft 21 which projects from the crankshaft 3 at a side of the crank arm 5 which is opposite to the side where the crankpin 4 is located.

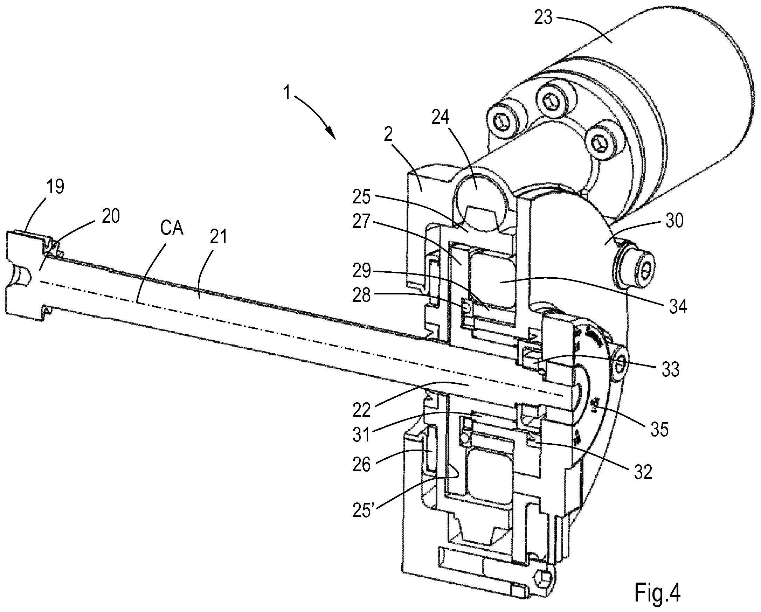

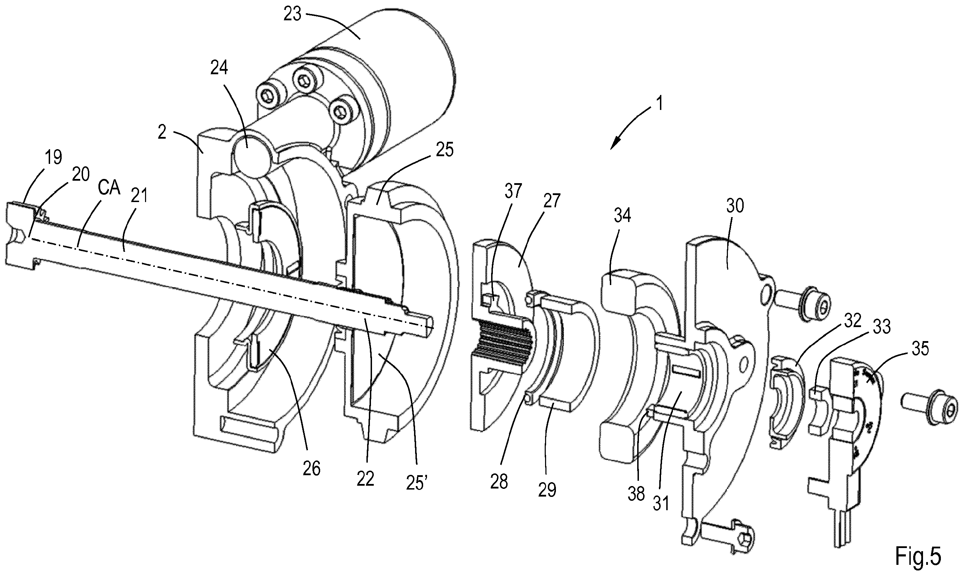

Figs. 4 and 5 show the drivable connection between the electric motor 23 and the adjusting shaft 21 on a larger scale and in more detail. The electric motor 23 is mounted to the engine block 2 and drivably coupled to a worm 24, which meshes with a worm gear 25. The worm gear 25 is rotatably mounted to the engine block 2 through a plain bearing for supporting the worm gear 25 in radial direction of the crankshaft axis CA. The plain bearing is formed by a circumferential inner surface of the engine block 2 which supports a circumferential outer surface of the worm gear 25. The adjusting shaft 21 passes through a central through-hole in the worm gear 25 such that the worm gear 25 is freely rotatable with respect to the adjusting shaft 21. An axial bearing 26 is located between the worm gear 25 and the engine block 2 for supporting the worm gear 25 and to allow the worm gear 25 to rotate with respect to the engine block 2 at minimum friction.

A pressure plate 27 is mounted to the adjusting shaft 21 at the input portion 22 thereof. The pressure plate 27 is provided with a central bush including internal splines which fit to external splines at the input portion 22 on the adjusting shaft 21. Consequently, the pressure plate 27 has a fixed rotational position with respect to the adjusting shaft 21, but it is movable in axial direction thereof. The pressure plate 27 is pressed against an axial side 25' of the worm gear 25 through a wave spring 29 that is mounted between an axial bearing 28 and a cover 30. The cover 30 is fixed to the engine block 2 and provided with an adjusting shaft bearing 31 for radially supporting the adjusting shaft 21 via the central bush of pressure plate 27.

The axial side 25' of the worm gear 25 and the pressure plate 27 form part of a friction coupling due to their cooperating contact surfaces. The friction coupling is functionally located between the input portion 22 of the adjusting shaft 21 and the worm gear 25. Under normal operating conditions, i.e. without excessive combustion force due to knocking or start of knocking, the worm gear 25 and the pressure plate 27 have a fixed position with respect to each other, such that upon activating the electric motor 23 the adjusting shaft 21 is rotated with respect to the engine block 2. The worm 24 and the worm gear 25 form an external transmission through which the electric motor 23 can drive the adjusting shaft 21.

Figs. 4 and 5 show a holder 32 which is fixed to the adjusting shaft 21 through a nut 33, which holder 32 limits a movement of the pressure plate 27 in a direction from the output portion 20 to the input portion 22 of the adjusting shaft 21.

Furthermore, the engine 1 is provided with a ringshaped electromagnet 34 which cooperates with the pressure plate 27. The electromagnet 34 has a fixed position with respect to the engine block 2; in this case it is fixed to the cover 30. When activating the electromagnet 34 a pulling force will be applied on the pressure plate 27 in a direction away from the worm gear 25 against the force of the wave spring 29. Consequently, the friction force between the pressure plate 27 and the worm gear 25 can be adjusted. When the electromagnet 34 is switched-off the friction force between the pressure plate 27 and the worm gear 25 is at its maximum.

Under normal operating conditions at fixed compression ratio the engine exerts an alternating torque onto the adjusting shaft 21, caused by combustion forces and inertia forces. These forces are transferred via the connecting rod 13 to the eccentric element 11 which may result in a torque on the eccentric element 11 about the centre line of the crankpin 4 due to the eccentricity of the bearing portion 12 of the eccentric element 11. The resulting alternating torque is transferred via the eccentric element gear 15, the first and second intermediate gears 16, 18, the auxiliary gear 19, the adjusting shaft 21, the pressure plate 27 and the worm gear 25 to the worm 24.

Under normal operating conditions the torque level at the friction coupling is too low to exceed the static friction force thereof. However, under certain operating conditions the engine 1 may generate a torque peak onto the adjusting shaft 21, for example caused by knocking in case of running at high compression ratio. In such a case the actual torque may exceed a maximum level of static friction of the friction coupling, causing the pressure plate 27 to rotate with respect to the worm gear 25. In practice such a torque peak is relatively short such that the angular shift between the worm gear 25 and the pressure plate 27 may only be a few degrees. The slipping friction coupling prevents the torque peak from being entirely transferred to the worm gear 25, hence avoiding overload of engaging teeth of the gears 15, 16, 18 and 19 of the internal transmission and of the worm 24 and the worm gear 25. Hence, the friction coupling is adapted such that in case of exceeding a predetermined torque of the adjusting shaft 21 onto the friction coupling, the friction coupling slips and the adjusting shaft 21 will rotate with respect to the engine block 2, independent from the worm 24 and the worm gear 25. In particular at part-load when the engine 1 is running at high compression ratio it is desired to rotate the adjusting shaft 21 to a direction in which the compression ratio decreases in case of a slipping friction coupling. This reduces the risk of knock immediately. Furthermore, the predetermined torque above which the friction coupling starts to slip may be selected such that the friction coupling slips when the engine load is switched from a low load to a high load condition, i.e. when the compression ratio must be decreased. This creates a quick switch from high to low compression ratio.

The engine 1 is also provided with a position sensor in the form of a potentiometer 35 for determining the rotational position of the adjusting shaft 21 relative to the engine block 2. The potentiometer 35 is mounted to the end of the adjusting shaft 21 as shown in Fig. 4. The rotational position of the adjusting shaft 21 corresponds to the actual compression ratio. The engine 1 is also provided with an electronic control unit 36 for receiving a signal from the potentiometer 35 and for controlling the electric motor 23 and the electromagnet 34, which is illustrated in Fig. 1.

The electronic control unit 36 contains a look-up map which defines a desired rotational position of the adjusting shaft 21 as a function of engine speed and load. The desired rotational position corresponds to the desired compression ratio as a function of engine speed and load. The look-up map can be determined at a number of combinations of engine speed and load of a similar engine on a test bed and stored in the electronic control units 36 of respective production engines. The electronic control unit 36 is configured such that when the engine 1 is running at a certain speed and load the actual signal from the potentiometer 35 is compared with the stored value in the look-up map at the same speed and load. Under normal operating conditions, without slip of the friction coupling, when the engine 1 switches to a different speed and load the electronic control unit 36 may control the electric motor 23 such that the adjusting shaft 21 is rotated to a position which corresponds to the desired rotational position at that speed and load as stored in the look-up map, resulting in a different compression ratio. However, if the signal from the potentiometer 35 changes at a standstill of the electric motor 23, the electronic control unit 36 detects a deviating signal and concludes that the friction coupling slips. After that, the electronic control unit 36 can control the electric motor 23 such that the adjusting shaft 21 is turned back to the original position as stored in the look-up map. In this case the friction coupling functions as a safeguard to protect the gears 15, 16, 18 and 19 of the internal transmission and the worm gear transmission and it would be possible to leave out the electromagnet 34.

The friction coupling and the potentiometer 35 together can also be used as a knock detection sensor, since a deviating signal from the potentiometer 35 is mostly an indication of an excessive combustion force, which in turn is an indication of knocking or start of knocking. The electronic control unit 36 may be configured such that in case of a deviating signal from the potentiometer 35, hence detecting knocking or start of knocking, another engine control parameter is adapted to reduce the tendency of knock, for example retarding ignition timing. After retarding ignition timing the electric motor 23 may be controlled such that the adjusting shaft 21 is set to a position which corresponds to the original position as stored in the look-up map.

Due to the presence of the electromagnet 34 the friction coupling is an adjustable friction coupling for adjusting the predetermined torque above which the friction coupling slips. This is advantageous for part-load conditions, where a torque peak due to an excessive combustion force will be lower than at full-load. In order to detect such a situation the friction coupling should slip at a lower torque level. For this reason the electronic control unit 36 may contain a look-up map in which control values of the electromagnet 34 are stored as a function of engine speed and load, wherein each control value corresponds to a torque level above which the friction coupling starts slipping. Such a look-up map can be developed on a test bench with a similar engine on which maximum allowable combustion pressure is determined, and subsequently stored in electronic control units 36 of respective production engines. In this case, when the engine 1 switches to a different speed and load the electronic control unit 36 not only turns the adjusting shaft 21 to a position which corresponds to a different compression ratio, but also changes the control value of the electromagnet 34, i.e. the electric power to the electromagnet 34.

Since the torque level on the adjusting shaft 21 above which slip of the friction coupling occurs may change during its lifetime, for example due to wear, the engine 1 is provided with a recalibrating tool. In the embodiment as shown in Figs. 1-5 the recalibrating tool is formed by cooperating projections 37, 38 and the electronic control unit 36. The cooperating projections 37, 38 are located at the pressure plate 27 and the cover 30, respectively, see Fig. 5, for creating a blocking system so as to stop rotation of the adjusting shaft 21 with respect to the engine block 2 at a recalibrating position thereof. The electronic control unit 36 is configured to control the electric motor 23 at standstill of the crankshaft 3 and at a certain control value of the electromagnet 34 such that the adjusting shaft 21 is rotated in a direction until it is stopped by the projections 37, 38, after which the electric motor 23 is driven further in the same direction causing the friction coupling to slip, thereby determining the actual required electrical power of the electric motor 23. This can be done at different control values of the electromagnet 34.

The stored control values of the electromagnet 34 can be determined on a similar engine on a test bed on which a relationship is derived between the required electrical power for driving the friction coupling in a slipping condition at different control values of the electromagnet 34. In case of a difference between the actual values and the stored values the electronic control unit 36 can update the look-up map containing the control values of the electromagnet 34 as a function of speed and load, for example by a correction coefficient derived from the original and the actual relationship between the required power of the electric motor 23 and the control values of the electromagnet 34. For example, if the original control value of the electromagnet 34 at a certain engine speed and load was a certain electrical current through the electromagnet 34 in order to achieve a certain maximum level of static friction, the electrical current can be decreased at the same speed and load in order to compensate for wear of the friction coupling.

The recalibration operation can be performed rather quickly, for example before starting the engine when the electrical system is switched-on.

The locations of the cooperating projections 37, 38 are such that they do not obstruct the desired variation of compression ratio during engine running. Their locations may be such that they form a hard stop when the rotational position of the adjusting shaft 21 is at the limits of or outside a range within which it is rotatable to vary between the lowest and highest compression ratio of the engine 1 under operating conditions.

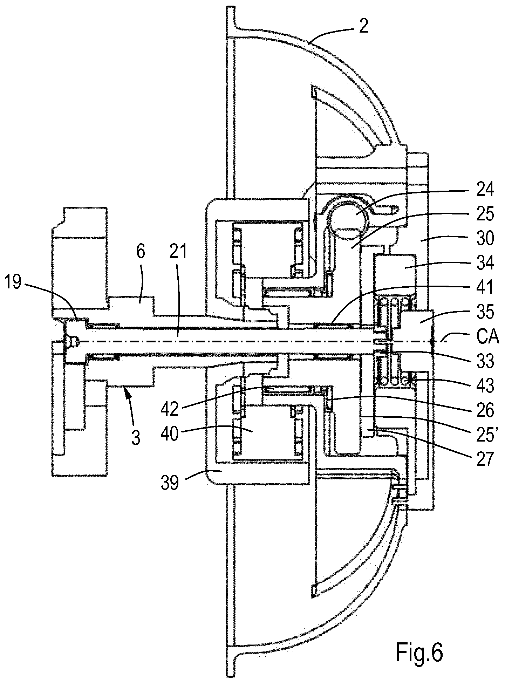

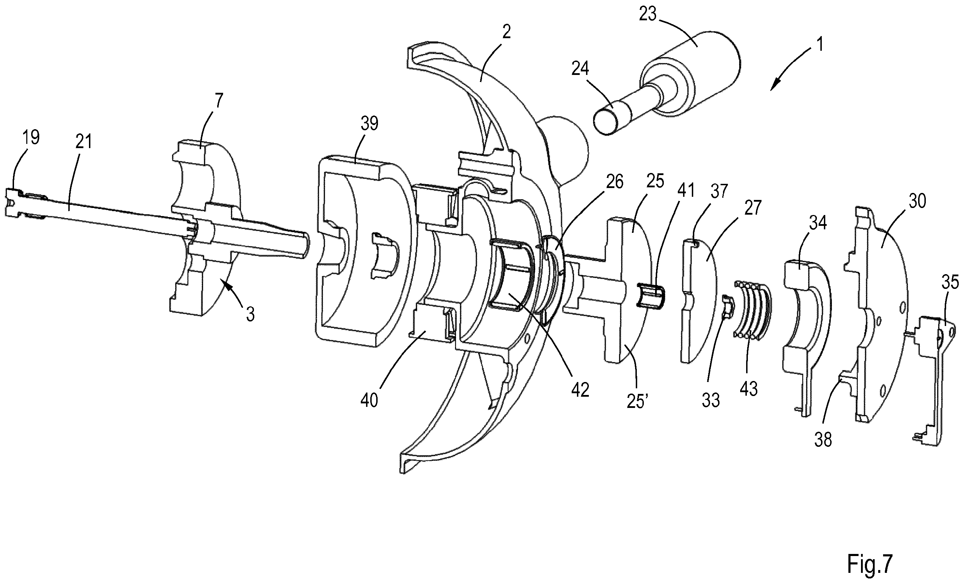

Figs. 6 and 7 show an alternative embodiment of the internal combustion engine 1. Corresponding parts of the embodiment as shown in Figs. 1-5 have the same reference signs in Figs. 6 and 7. The embodiment of Figs. 6 and 7 works in a similar manner as the embodiment as discussed hereinbefore. The crankshaft 3 is provided with a rotor 39 of an alternator that is fixed on the main portion 6. The rotor 39 cooperates with a stator 40 which is fixed to the engine block 2.

In the embodiment as shown in Figs. 6 and 7 the worm gear 25 is rotatably mounted on the adjusting shaft 21 through an inner roller bearing 41 and also rotatably mounted to the engine block 2 through an outer roller bearing 42. Furthermore, the pressure plate 27 is pressed against an axial side 25' of the worm gear 25 through a coil spring 43, which is supported by the engine block 2.

The invention is not limited to the embodiments shown in the drawings and described hereinbefore, which may be varied in different manners within the scope of the claims and their technical equivalents. The mechanism for varying the compression ratio may be different, for example an alternative mechanism in which the eccentric element is replaced by a link, which in turn is drivably coupled to the adjusting shaft through an alternative transmission such as a rod linkage, in which the link does not fully rotate with respect to the engine block like the eccentric element, but has a reciprocating movement such that the orientation and location of the link is the same after each revolution of the crankshaft when running at fixed compression ratio, i.e. when the adjusting shaft is not rotated.

It is also conceivable to apply the friction coupling for other applications than an internal combustion engine. In general terms, the invention is also related to a friction coupling system, comprising a frame, a shaft which is rotatably mounted to the frame and drivably connected or drivably connectable to a load such that in a connected condition between the shaft and the load a torque is exerted on the shaft by the load, a drive unit for driving an input portion of the shaft so as to turn the shaft with respect to the frame hence driving the load, and a friction coupling which is functionally located between the drive unit and the input portion of the shaft, wherein the friction coupling is adapted such that in case of exceeding a predetermined torque on the shaft caused by the load, the friction coupling slips. This means that under normal operating conditions the drive unit drives the load through the friction coupling and the shaft, but in extreme conditions, for example when the load causes an excessive torque onto the shaft, the friction coupling slips. In fact, the frame and the shaft are comparable to the engine block and the adjusting shaft, respectively, as described hereinbefore, whereas the load is comparable to the eccentric element in combination with the connecting rod and the internal transmission.

The system may be provided with a position sensor for determining the rotational position of the shaft, and a control unit for receiving a signal from the position sensor and controlling the drive unit, which control unit contains a look-up map which defines a desired rotational position of the shaft. When the actual rotational position of the shaft differs from the desired rotational position the control unit may activate the drive unit to turn the shaft to the desired rotational position. The desired rotational position may be dependent on the application in which the system is applied. For example, in the engine as described hereinbefore the desired rotational position is related to the desired compression ratio at different combinations of engine speed and load.

The system may be provided with an external transmission as defined in claims 4 and 5, the drive unit as defined in claim 6, whereas the friction coupling may have the features as defined in claims 8-14.

## Claims

1. An internal combustion engine (1) with variable compression ratio, comprising
an engine block (2),
a crankshaft (3) having at least a crankpin (4), a crank arm (5) and a main portion (6), wherein the main portion (6) is supported by the engine block (2) and the crankshaft (3) is rotatable with respect to the engine block (2) about a crankshaft axis (CA),
a connecting rod (13) including a big end which is drivably coupled to the crankpin via a link (11), which link (11) is rotatable with respect to the big end about a centreline of the big end and to the crankpin (4) about a centreline of the crankpin (4),
an adjusting shaft (21) which is rotatable with respect to the engine block (2) and drivably coupled to the link (11) such that upon turning the adjusting shaft (21) the link (11) turns about the crankpin at a virtual standstill of the engine (1) so as to vary its compression ratio,
a drive unit (23) for driving an input portion (22) of the adjusting shaft (21) so as to turn the adjusting shaft (21) with respect to the engine block (2),
a position sensor (35) for determining the rotational position of the adjusting shaft (21) relative to the engine block (2),
a control unit (36) for receiving a signal from the position sensor (35) and controlling the drive unit (23), which control unit (36) contains a look-up map which defines a desired rotational position of the adjusting shaft (35) as a function of engine speed and load, **characterized in that** the internal combustion engine (1) comprises a friction coupling (25', 27, 29, 43) which is functionally located between the drive unit (23) and the input portion (22) of the adjusting shaft (21), wherein the friction coupling (25', 27, 29, 43) is adapted such that in case of exceeding a predetermined torque on the adjusting shaft (21) caused by the connecting rod (13), the friction coupling (25', 27, 29, 43) slips.

2. An internal combustion engine (1) according to claim 1, wherein the engine is a four-stroke engine and wherein the link comprises an eccentric element (11) on which the big end of the connecting rod (13) is rotably mounted, which eccentric element (11) is rotatably mounted on the crankpin (4), wherein the adjusting shaft (21) extends concentrically through the main portion (6) of the crankshaft (3) such that its centreline coincides with the crankshaft axis (CA) and which adjusting shaft (21) is rotatable with respect to the crankshaft (3), wherein the engine (1) further comprises an internal transmission (15, 16, 18, 19) through which the eccentric element (11) is drivably coupled to an output portion (20) of the adjusting shaft (21), wherein the internal transmission (15, 16, 18, 19) is adapted such that when the adjusting shaft (21) has a fixed rotational position with respect to the engine block (2) under operating conditions the eccentric element (11) rotates with respect to the crankpin (4) in opposite direction of the direction in which the crankshaft (3) rotates with respect to the engine block (2) and at half speed thereof, wherein the input portion (22) is located at a distance from the output portion (20) at a side of the crank arm (5) which is opposite to the side where the crankpin (4) is located.

3. An internal combustion engine (1) according to claim 1 or 2, wherein the control unit (36) is configured such that after detecting a rotation of the adjusting shaft (21) through a signal from the position sensor (35), without controlling the drive unit (23), the control unit (36) controls the drive unit (23) such that the adjusting shaft (21) is turned back to a position as defined by the look-up map which defines a desired rotational position of the adjusting shaft (35) as a function of engine speed and load.

4. An internal combustion engine (1) according to any one of the preceding claims, wherein an external transmission (24, 25) is functionally located between the friction coupling (25', 27, 29, 43) and the drive unit (23).

5. An internal combustion engine (1) according to claim 4, wherein the external transmission comprises a worm gear (25) which is drivably coupled to the input portion (22) of the adjusting shaft (21) via the friction coupling (25', 27, 29, 43) and a worm (24) which meshes with the worm gear (25) and which is drivably coupled to the drive unit (23).

6. An internal combustion engine (1) according to any one of the preceding claims, wherein the drive unit is an electric motor (23).

7. An internal combustion engine (1) according to any one of the preceding claims, wherein under operating conditions the rotational position of the link (11) relative to the crankshaft is such that when the friction coupling (25', 27, 29, 43) slips as a result of an excessive combustion force on the connecting rod (13) the adjusting shaft (21) rotates with respect to the engine block (2) in a direction in which the compression ratio decreases.

8. An internal combustion engine (1) according to any one of the preceding claims, wherein the friction coupling comprises a first part (25') which is drivably coupled to the drive unit (23) and a second part (27) which is drivably coupled to the input portion (22) of the adjusting shaft (21), wherein the friction coupling further comprises a spring (29, 43) for pressing the first and second parts (25', 27) to each other.

9. An internal combustion engine according to claims 5 and 8, wherein the first part is formed by an axial side (25') of the worm gear (25) and the second part is a pressure plate (27) which is mounted to the adjusting shaft (21) and movable in axial direction thereof, wherein the spring (29, 43) is mounted between the pressure plate (27) and the engine block (2) such that the pressure plate (27) is pressed against the axial side (25') of the worm gear (25).

10. An internal combustion engine (1) according to any one of the preceding claims, wherein the friction coupling is an adjustable friction coupling (25', 27, 29, 34, 43) for adjusting the predetermined torque above which the friction coupling slips.

11. An internal combustion engine (1) according to claim 10 and one of the claims 8 and 9, wherein the friction coupling is provided with an electromagnet (34) which cooperates with one of the first and second parts (27) and which is controllable by the control unit (36) so as to exert a counterforce on the one of the first and second parts (27) against the force of the spring (29, 43), wherein the control unit (36) contains a look-up map of control values of the electromagnet (34) as a function of engine speed and load.

12. An internal combustion engine (1) according to claim 11, wherein the engine (1) is provided with a blocking system (37, 38) for obstructing rotation of the adjusting shaft (21) with respect to the engine block (2) at a recalibrating position of the adjusting shaft (21), wherein the control unit (36) is configured such that at a standstill of the crankshaft (3) the drive unit (23) is driven when the blocking system (37, 38) obstructs rotation of the adjusting shaft (21), wherein actual driving power of the drive unit (23) for overcoming friction of the friction coupling (25', 27, 29, 34, 43) during driving the drive unit (23) is determined by the control unit (36) at different control values of the electromagnet (34), and wherein the actual driving power as a function of the control values of the electromagnet (34) is compared with a relationship between desired driving power and control values of the electromagnet (34) as stored in the control unit (36), on the basis of which the look-up map of control values of the electromagnet (34) as a function of engine speed and load is updated.

13. An internal combustion engine (1) according to claim 12 and to claim 9, wherein the blocking system comprises cooperating projections (37, 38) at the pressure plate (7) and the engine block (2), which abut each other at the recalibrating position.

14. An internal combustion engine (1) according to claim 13, wherein the recalibrating position corresponds to the lowest compression range under operating conditions.

15. An internal combustion engine (1) according to any one of the preceding claims and claim 7, wherein the predetermined torque is selected such that the friction coupling (25', 27, 29, 43) slips when the engine load switches from a low load condition to a high load condition.
